Europäisches Patentamt

European Patent Office

Office européen des brevets

(19)

(11) Veröffentlichungsnummer: **0 170 084**
**B1**

(12) # EUROPÄISCHE PATENTSCHRIFT

(45) Veröffentlichungstag der Patentschrift:
**11.05.88**

(51) Int. Cl.⁴: **H 01 J 9/227**

(21) Anmeldenummer: **85108216.4**

(22) Anmeldetag: **03.07.85**

(54) Verfahren zur Herstellung eines ebenen Leuchtschirmes.

(30) Priorität: **05.07.84 DE 3424714**

(43) Veröffentlichungstag der Anmeldung:
**05.02.86 Patentblatt 86/6**

(45) Bekanntmachung des Hinweises auf die Patenterteilung:
**11.05.88 Patentblatt 88/19**

(84) Benannte Vertragsstaaten:
**BE DE FR GB IT NL SE**

(56) Entgegenhaltungen:
**DE - C - 2 804 127**
**US - A - 4 219 587**
**US - A - 4 451 504**

**PATENT ABSTRACTS OF JAPAN, unexamined applications, E Sektion, Band 3, Nr.28, 9.März 1979; THE PATENT OFFICE JAPANESE GOVERNMENT, Seite 129E96**

(73) Patentinhaber: **Standard Elektrik Lorenz Aktiengesellschaft, Lorenzstrasse 10, D-7000 Stuttgart 40 (DE)**

(72) Erfinder: **Viohl, Uwe, Dr., Toblacher Strasse 44, D-7307 Aichwald 3 (DE)**

(74) Vertreter: **Pohl, Heribert, Dipl.-Ing et al, Standard Elektrik Lorenz AG Patent- und Lizenzwesen Postfach 30 09 29, D-7000 Stuttgart 30 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zum Beschichten eines ebenen Schirmglases für flache Farbbildröhren gemäss dem Oberbegriff des Anspruchs 1.

Aus der DE-PS 2 804 127 ist ein Verfahren zur Herstellung eines planen Leuchtschirmes für flache Farbbildanzeigegeräte bekannt, bei dem die Leuchtstoffe in einer Aufschlämmung mit Lösungsmitteln und weiteren Stoffen verwendet werden. Bei der Verwendung von Lösungsmitteln zur Herstellung der Leuchtstoff-Aufschlämmung erreicht man zwar, dass beim Beschichten nur ein Arbeitsgang erforderlich ist, aber das Lösungsmittel muss aus der Aufschlämmung nach dem Aufbringen wieder heraus und hinterlässt dann eine Leuchtstoffschicht mit einer rauhen Oberfläche. Die Leuchtstoffschicht hat auch keine optimale Packungsdichte und Lösungsmittel sind explosionsfähig.

Der Erfindung liegt die Aufgabe zugrunde, ein Verfahren der eingangs genannten Art anzugeben, bei dem die Leuchtstoffe anders aufgeschlämmt sind.

Die Lösung dieser Aufgabe erfolgt mit den im Anspruch 1 angegebenen Mitteln.

Durch die Anwendung eines reaktiven Binders und eines Aktivators entfällt der besondere Sicherheitsmassnahmen erfordernde Umgang mit Lösungsmitteln. Da auch aus den Leuchtstoffen nach dem Aufbringen nichts entfernt werden muss, haben diese eine glatte Oberfläche und einen guten Füllungsgrad, was eine Farbüberlagerung verhindert. Hierdurch und durch eine extrem gute Haftung der Leuchtstoffe auf dem Schirmglas lassen sich schmale Streifenbreiten oder kleine Leuchtfleckdurchmesser erreichen.

Der Aktivator kann mit der Leuchtstoff-Aufschlämmung dadurch in Verbindung kommen, dass er entweder als erstes auf das Schirmglas aufgebracht wird oder jede Leuchtstoffschicht damit besprüht wird.

Als Binder wird vorzugsweise ein monomerer Methacrylsäureester verwendet, der beispielsweise von der Firma Henkel unter der Bezeichnung Metal-Ion LA 2002 vertrieben wird. Der zugehörige Aktivator der Firma Henkel trägt die Bezeichnung LA 5202.

Nachstehend wird die Erfindung anhand eines Ausführungsbeispiels näher erläutert.

Das wie üblich vorbehandelte ebene Schirmglas wird mit dem Aktivator gleichmässig besprüht und dann getrocknet. Dann wird die Grundmaske auf das Schirmglas gelegt und darüber die erste Beschichtungsmaske, beispielsweise für den grünen Leuchtstoff, angebracht. Darauf wird die folgende Aufschlämmung gleichmässig gegossen und der überschuss durch Abstreifen entfernt:

200 g    Grünleuchtstoff vom Typ Zn, CdS, (Cu, A1) dispergiert in
1000 g   reaktiven Binder wie angegeben.

Nach dem Aushärten der Aufschlämmung wird die erste Beschichtungsmaske entfernt und die zweite Beschichtungsmaske, beispielsweise für den blauen Leuchtstoff, angebracht. Dann wird die nachstehende Aufschlämmung auf die Beschichtungsmaske gleichmässig aufgegossen und der Überschuss durch Abstreifen entfernt:

220 g    Blauleuchtstoff vom Typ ZnS, Ag dispergiert in
1000 g   reaktiven Binder wie angegeben.

Nach dem Aushärten der Aufschlämmung wiederholt sich der Vorgang mit der dritten Beschichtungsmaske für den roten Leuchtstoff. Dabei sind

250 g    Rotleuchtstoff vom Typ $Y_2O_2S$, Eu dispergiert in
1000 g   reaktiven Binder wie angegeben.

Nach dem Aushärten dieser Aufschlämmung werden die Beschichtungsmaske und die Grundmaske entfernt und der so hergestellte Leuchtschirm wird zum Lackieren und Aluminisieren weitergegeben.

Bei flachen Farbbildröhren mit einer Schwarzmatrixschicht wird vor dem Aufbringen der Grundmaske eine Matrixmaske auf das ebene Schirmglas gelegt und darüber folgende Aufschlämmung gleichmässig gegossen und der Überschuss durch Abstreifen entfernt:

100 g    Graphit mit der Korngrösse von 0,05 mm werden in
1000 g   reaktiven Binder wie angegeben dispergiert.

Nach dem Aushärten wird die Matrixmaske entfernt und die Grundmaske aufgelegt und die Beschirmung wie beschrieben vorgenommen.

Anstatt als erstes das ebene Schirmglas mit dem Aktivator zu beschichten, kann dieser auch nach jedem Aufbringen der Aufschlämmungen auf diese aufgesprüht werden.

## Patentansprüche

1. Verfahren zum Beschichten eines ebenen Schirmglases zur Herstellung eines Leuchtschirmes für flache Farbbildröhren, bei dem auf das Schirmglas eine Grundmaske aufgelegt und anschliessend nacheinander je eine für die entsprechende Farbe vorgesehene Beschichtungsmaske auf der Grundmaske gehalten wird, wobei dann der zur jeweiligen Beschichtungsmaske gehörende Leuchtstoff aufgebracht wird, dadurch gekennzeichnet, dass der jeweilige Leuchtstoff in einem reaktiven Binder dispergiert ist und auf dem Schirmglas mit einem Aktivator zusammenkommt.

2. Verfahren nach Anspruch 1, dadurch gekennzeichnet, dass der Aktivator vor dem Aufbringen der Leuchtstoffe auf das Schirmglas aufgetragen wird.

3. Verfahren nach Anspruch 1, dadurch gekennzeichnet, dass die Leuchtstoffe nach ihrem Aufbringen mit dem Aktivator besprüht werden.

4. Verfahren nach Anspruch 1, dadurch gekennzeichnet, dass der Binder aus einem monomeren Methacrylsäureester besteht.

5. Verfahren nach Anspruch 4, dadurch gekennzeichnet, dass in 1000 g Binder 200 g Grünleuchtstoff bzw. 220 g Blauleuchtstoff bzw. 250 g Rotleuchtstoff dispergiert werden, wenn der Grünleuchtstoff aus Zn, CdS, (Cu, A1), der Blau-Leuchtstoff aus ZnS, Ag, und der Rotleuchtstoff aus $Y_2O_2S$, Eu besteht.

## Claims

1. Method of coating an even glass faceplate panel for producing a phosphor screen intended to be used for flat colour picture tubes, in which a basic mask is placed on the glass faceplate panel and, thereafter, one at a time in turn, one coating mask each, for the respective colour, is retained on the basic mask, the phosphor belonging to the respective coating mask then being deposited, characterized in that the phosphor in question is dispersed in a reactive binder and meets with an activator on the glass faceplate panel.

2. A method as claimed in claim 1, characterized in that the activator is applied prior to the deposition of the phosphors on the glass faceplate panel.

3. A method as claimed in claim 1, characterized in that the phosphors, after having been deposited, are sprayed with the activator.

4. A method as claimed in claim 1, characterized in that the binder consists of a monomer methacrylic acid ester.

5. A method as claimed in claim 4, characterized in that 200 g green-emitting phosphor or 220 g blue-emitting phosphor or 250 g red-emitting phosphor is dispersed in 1000 g binder when the green-emitting phosphor consists of Zn, CdS, (Cu, A1), the blue-emitting phosphor consists of ZnS, Ag, and the red-emitting phosphor consists of $Y_2O_2S$, Eu, respectively.

## Revendications

1. Procédé pour revêtir un panneau frontal en verre plat, afin de produire l'écran luminescent d'un tube image couleur, dans lequel un masque de base repose sur le panneau frontal et, ensuite, des masques de revêtement, prévus chacun pour une couleur respective, sont maintenus l'un après l'autre sur le masque de base, de sorte que les produits luminescents propres à chacun des masques de revêtement soient alors déposés, caractérisé en ce que chacun des produits luminescents est dispersé dans un liant réactif et vient au contact d'un activateur sur le panneau frontal.

2. Procédé conforme à la revendication 1, caractérisé en ce que l'activateur est appliqué avant le dépôt des produits luminescents sur le panneau frontal.

3. Procédé conforme à la revendication 1, caractérisé en ce que les produits luminscents, après leur dépôt, reçoivent l'activateur sous la forme d'une pulvérisation.

4. Procédé conforme à la revendication 1, caractérisé en ce que le liant consiste en un monomère d'ester méthacrylique.

5. Procédé conforme à la revendication 4, caractérisé en ce que 200 g de produit luminescent vert, ou 220 g de produit luminescent bleu, ou 250 g de produit luminescent rouge, sont dispersés dans 1000 g de liant, le produit luminescent vert étant du Zn, CdS, (Cu, A1), le produit luminescent bleu du ZnS, Ag et le produit luminescent rouge du $Y_2O_2S$, Eu, respectivement.